# EUROPEAN PATENT APPLICATION

(11) **EP 4 794 193 A1**
(43) Date of publication of application: **19.08.2026**
(21) Application number: 24895466.1
(22) Date of filing: 23.05.2024
(51) Int. Cl.: H02S 20/30

(54) **LOCKING DEVICE, PHOTOVOLTAIC SUPPORT AND PHOTOVOLTAIC SYSTEM**

(30) Priority: 30.11.2023 CN 202311621964
(71) Applicant: Trina Solar Co., Ltd, Changzhou, Jiangsu 213031 (CN)
(72) Inventor: XU, Baoqi, Changzhou, Jiangsu 213031 (CN); QIANG, Shengguan, Changzhou, Jiangsu 213031 (CN); QUAN, Peng, Changzhou, Jiangsu 213031 (CN); ZHANG, Dajun, Changzhou, Jiangsu 213031 (CN); LIU, Zhenbiao, Changzhou, Jiangsu 213031 (CN)
(74) Representative: Arnold & Siedsma
(86) International application number: PCT/CN2024/094989
(87) International publication number: WO 2025/112356

(57) **Abstract**

The present application relates to a locking device, a photovoltaic support, and a photovoltaic system. The locking device comprises a box body (110), an input member (120), and an output member (130); a pushing member (141) and an elastic member (142) are provided between each of output toggle parts (131) and an input toggle part (121), the elastic member (142) being connected between the pushing member (141) and the output toggle part (131) and being used for driving the pushing member (141) to be in a locked position; when the pushing members (141) are in the locked positions, the box body (110) and the output member (130) fit each other so as to hinder the pushing members (141) from abutting against the input toggle part (121) in the circumferential direction; by means of the input toggle part (121), the input member (120) drives the pushing members (141) to deviate from the locked positions until the pushing members (141) abut against the output toggle parts (131), so as to drive the output member (130) to rotate.

## Description

### CROSS-REFERENCE TO RELATED APPLICATIONS

This application claims priority to Chinese patent application No. 2023116219643, entitled "LOCKING DEVICE, PHOTOVOLTAIC SUPPORT AND PHOTOVOLTAIC SYSTEM" filed on November 30, 2023, the content of which is hereby incorporated by reference in its entirety.

### TECHNICAL FIELD

The present application relates to the field of photovoltaic technology, and in particular to a locking device, a photovoltaic bracket, and a photovoltaic system.

### BACKGROUND

Solar photovoltaic power generation is a technology that receives incident sunlight through an array formed by solar photovoltaic modules, converts light energy into electrical energy through photovoltaic conversion, and collects the generated electrical energy for use. A solar photovoltaic system usually adopts a photovoltaic bracket to mount solar photovoltaic modules, and drives the photovoltaic modules to rotate through a driving unit, so that sunlight always directly shines on the photovoltaic modules, improving the absorption and utilization efficiency of solar energy.

The photovoltaic bracket generally includes single-point driving and multi-point driving. Single-point driving means that one driving unit drives a main shaft to rotate. Multi-point driving means that a plurality of driving units drive the main shaft to rotate. Taking single-point driving as an example, when encountering extreme weather such as strong winds, the axial torque applied by the wind load on the main shaft will gradually accumulate along the main shaft to the driving unit, thereby affecting the use reliability of the driving unit, and subsequently affecting the photovoltaic power generation rate. In addition, the related technology cannot realize the transmission of large torque.

### SUMMARY

According to various embodiments of the present application, a locking device, a photovoltaic bracket, and a photovoltaic system are provided.

In a first aspect, the present application provides a locking device applied to a main shaft of a photovoltaic bracket, and the locking device includes:
a housing;
an input member at least partially located in the housing; the input member being configured with at least one input toggle portion; and
an output member at least partially located in the housing; the output member being configured with at least two output toggle portions, and the output toggle portions and the input toggle portion are alternately arranged along a circumferential direction;
wherein a pushing member and an elastic member are provided between each of the output toggle portions and the input toggle portion; and the elastic member is connected between the pushing member and the output toggle portion; the elastic member is configured to drive the pushing member to be in a locked position; when the pushing member is in the locked position, the housing and the output member cooperate to restrict the pushing member from abutting against the input toggle portion along the circumferential direction;
the input member is configured to be operably rotated, so as to drive the pushing member to deviate from the locked position through the input toggle portion, until the pushing member abuts against the output toggle portion to drive the output member to rotate.

In an embodiment, the at least one input toggle portion includes a plurality of input toggle portions; between adjacent input toggle portions, two elastic members are provided; the two elastic members are spaced apart at both ends of the output toggle portion along the circumferential direction.

In an embodiment, both ends of the output toggle portion along the circumferential direction are each configured with a limiting groove; when the pushing member is in the locked position, the elastic member is partially located in the limiting groove; when the pushing member abuts against the output toggle portion, the elastic member is completely located within the limiting groove.

In an embodiment, when the pushing member is in the locked position, a first gap is provided between the pushing member and the adjacent input toggle portion.

In an embodiment, between the input toggle portion and the output toggle portion adjacent thereto, along the circumferential direction, and along a direction from the input toggle portion to the output toggle portion, a radial distance between the output member and the housing gradually increases; when the pushing member is in the locked position, a radial distance between the output member and the housing is equal to a diameter of the pushing member.

In an embodiment, the locking device further includes a first bearing, and along an axial direction of the first bearing, the input member and the output member are respectively connected to both sides of the first bearing.

In an embodiment, the first bearing is a thrust roller bearing.

In an embodiment, a second bearing is connected between an inner wall of the housing and the input member; and a third bearing is connected between the inner wall of the housing and the output member.

In an embodiment, the input member is configured with a first stepped groove, and the second bearing is located in the first stepped groove. The output member is configured with a second stepped groove, and the third bearing is located in the second stepped groove.

In an embodiment, the locking device further includes a first limiting member connected to the housing; the first limiting member abuts against one side of the input member along an axial direction of the input member to restrict the input member from moving along the axial direction of the input member.

The locking device further includes a second limiting member connected to the housing; the second limiting member abuts against the output member to restrict the output member from moving along an axial direction of the output member.

In an embodiment, the first limiting member includes a first retaining ring connected to an inner wall of the housing, and the first retaining ring abuts against one side of the input member along the axial direction of the input member.

Alternatively, the first limiting member includes a first baffle connected to one side of the housing along an axial direction of the housing, and the first baffle abuts against one side of the input member along the axial direction of the input member.

In an embodiment, the second limiting member includes a second retaining ring connected to an inner wall of the housing, and the second retaining ring abuts against one side of the output member along the axial direction of the output member.

Alternatively, the second limiting member includes a second baffle connected to one side of the housing along an axial direction of the housing, and the second baffle abuts against one side of the output member along the axial direction of the output member.

In an embodiment, an inner wall of the housing is provided with a first engaging groove configured to allow the first limiting member to be engaged therein. The inner wall of the housing is provided with a second engaging groove configured to allow the second limiting member to be engaged therein.

In a second aspect, the present application provides a photovoltaic bracket.

The photovoltaic bracket according to the embodiments of the present application includes a first main shaft, a second main shaft, and the locking device as described above connected between the first main shaft and the second main shaft; the first main shaft and the second main shaft are configured to mount a photovoltaic module.

In a third aspect, the present application further provides a photovoltaic system.

The photovoltaic system according to the embodiments of the present application includes the photovoltaic bracket as described above and a photovoltaic module mounted on the photovoltaic bracket.

The details of one or more embodiments of the present application are set forth in the accompanying drawings and the description below. Other features, objects, and advantages of the present application will become apparent from the description, drawings, and claims.

### BRIEF DESCRIPTION OF THE DRAWINGS

In order to illustrate the embodiments of the present application or conventional technologies more clearly, the drawings used in the description of specific embodiments or conventional technologies will be described briefly. Apparently, the following described drawings are merely for the embodiments of the present application, and other drawings can be derived based on these drawings by those of ordinary skill in the art without any creative effort.
FIG. 1 is a perspective view of a locking device provided in an embodiment of the present application.
FIG. 2 is an exploded view of the locking device shown in FIG. 1.
FIG. 3 is a cross-sectional view of the locking device shown in FIG. 1 taken along a first section.
FIG. 4 is a partial schematic view of the locking device shown in FIG. 3.
FIG. 5 is a cross-sectional view of the locking device shown in FIG. 1 taken along a second section.

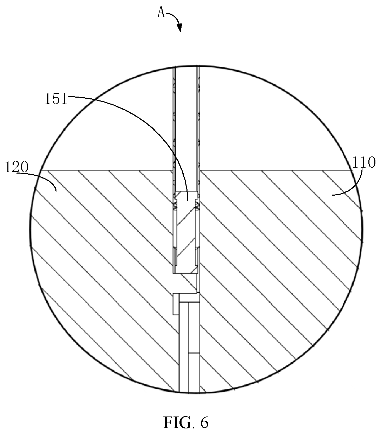

FIG. 6 is an enlarged partial view of a portion A in the locking device shown in FIG. 5.
FIG. 7 is a schematic view of a first bearing in the locking device shown in FIG. 2.
FIG. 8 is a schematic view of a photovoltaic bracket provided in an embodiment of the present application.

### Description of reference numerals:

10. photovoltaic bracket; 100. locking device; 110. housing; 111. accommodating groove; 112. first engaging groove; 113. second engaging groove; 120. input member; 121. input toggle portion; 122. first stepped groove; 130. output member; 131. output toggle portion; 1311. limiting groove; 132. second stepped groove; 141. pushing member; 142. elastic member; 151. first bearing; 1511. thrust roller bearing; 152. second bearing; 153. third bearing; 161. first limiting member; 1611. first retaining ring; 162. second limiting member; 1621. second retaining ring; 210. first main shaft; 220. second main shaft; 300. driving unit.

### DETAILED DESCRIPTION

The technical solutions of the present application will now be described in detail with reference to the embodiments in order to make clear and complete description. Obviously, the described embodiments are part of the embodiments of the present application, and not all of the embodiments. Based on the embodiments in the present application, all other embodiments obtained by those of ordinary skill in the art without creative efforts shall fall within the protection scope of the present application.

In order to facilitate the understanding of the embodiments, the embodiments will be described in detail below in conjunction with the accompanying drawings.

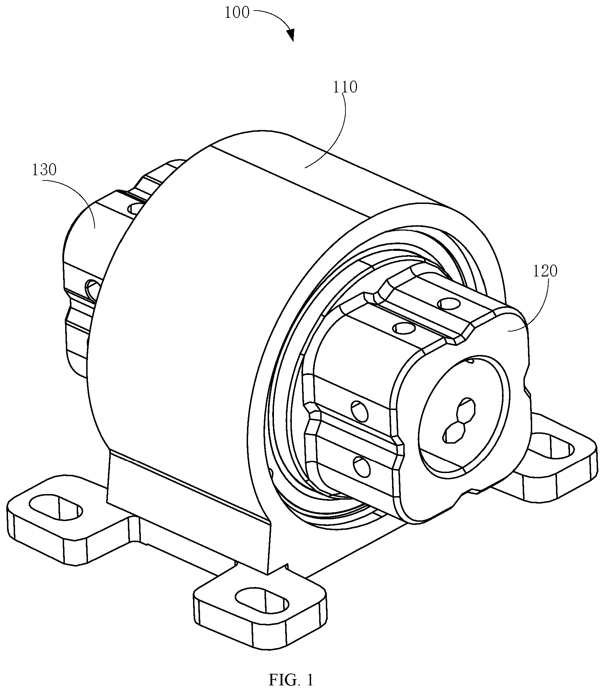

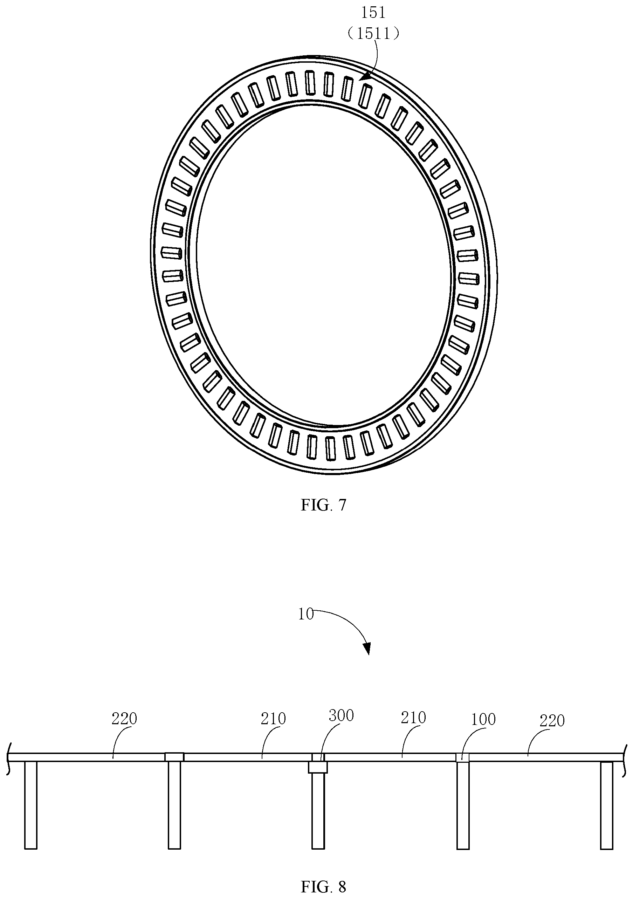

Referring to FIG. 1 to FIG. 3, a locking device 100 provided in an embodiment of the present application is applied to a main shaft of a photovoltaic bracket 10 as shown in FIG. 8. The locking device 100 includes a housing 110, an input member 120, and an output member 130. The input member 120 is at least partially located in an accommodating groove 111 of the housing 110. The output member 130 is at least partially located in the accommodating groove 111 of the housing 110. The input member 120 is configured with at least one input toggle portion 121. The output member 130 is configured with at least two output toggle portions 131. The input toggle portion 121 is located between the two output toggle portions 131. That is, the output toggle portions 131 and the input toggle portion 121 are alternately arranged along a circumferential direction. A pushing member 141 and an elastic member 142 are provided between each output toggle portion 131 and the input toggle portion 121 adjacent thereto. The elastic member 142 is connected between the pushing member 141 and the output toggle portion 131. The elastic member 142 is configured to drive the pushing member 141 to be in a locked position. When the pushing member 141 is in the locked position, the housing 110 and the output member 130 cooperate to restrict the pushing member 141 from approaching the input toggle portion 121 along the circumferential direction and abutting against the input toggle portion 121. It can be understood that the movement of the pushing member 141 approaching the output toggle portion 131 along the circumferential direction is not restricted.

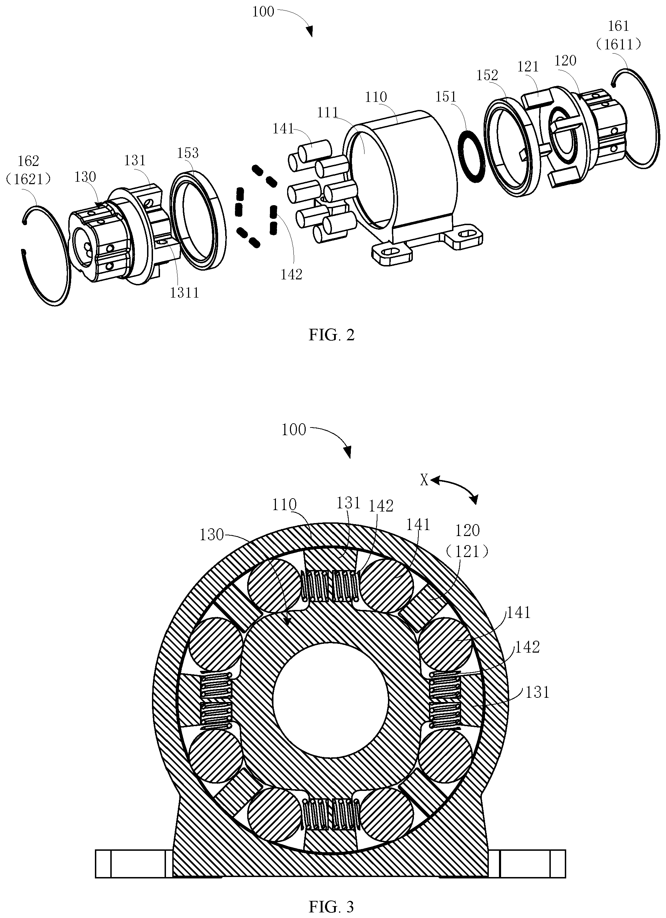

A dimension of the input toggle portion 121 along a radial direction is less than a dimension of the pushing member 141 along the radial direction. That is, when the pushing member 141 is in the locked position, both ends of the pushing member 141 along the radial direction respectively abut against the housing 110 and the output member 130, such that the housing 110 and the output member 130 cooperate to restrict the pushing member 141 from approaching the input toggle portion 121 along the circumferential direction. One end of the input toggle portion 121 along the radial direction abuts against the housing 110, and the other end of the input toggle portion 121 along the radial direction does not abut against the output member 130. Therefore, the movement of the input toggle portion 121 along the circumferential direction is not restricted by the housing 110 and the output member 130. The input member 120 is configured to be operably rotated, so as to drive the pushing member 141 to deviate from the locked position through the input toggle portion 121, such that the pushing member 141 can abut against the output toggle portion 131 and drive the output member 130 to rotate. As shown in FIG. 3, the circumferential direction is schematically illustrated by an arrow X.

As shown in FIG. 1 to FIG. 3 and FIG. 8, when the locking device 100 is applied to the photovoltaic bracket 10, the input member 120 and the first main shaft 210 of the photovoltaic bracket 10 can be connected through fasteners such as screws. The output member 130 is connected to the second main shaft 220 of the photovoltaic bracket 10, so that there is no need to dispose a bearing assembly or the like between the first main shaft 210 and the second main shaft 220 to realize power transmission. When the photovoltaic bracket 10 operates normally, a rotational power of a driving unit 300 is transmitted to the input member 120 through the first main shaft 210, so that the input member 120 rotates until the input toggle portion 121 abuts against the pushing member 141, thereby driving the pushing member 141 to deviate from the locked position. When the pushing member 141 compresses the elastic member 142 and moves from the locked position to abut against the output toggle portion 131, the output toggle portion 131 can be driven to rotate, thereby transmitting the rotational power to the output member 130 and the second main shaft 220 connected to the output member 130. This realizes synchronous co-rotation of the first main shaft 210 and the second main shaft 220, thereby ensuring the orientation consistency of a plurality of photovoltaic modules (not shown in the figures) mounted on the first main shaft 210 and the second main shaft 220, and ensuring the photovoltaic power generation efficiency. By respectively providing the output toggle portions 131 on both circumferential sides of the input toggle portion 121, no matter whether the input member 120 rotates clockwise or counterclockwise, the rotational power can be transmitted to the output member 130 through the output toggle portion 131 on the corresponding side, realizing the transmission of torque. At the same time, during the power transmission process, since the input toggle portion 121 is in rigid contact with the output toggle portion 131 through the pushing member 141, large torque transmission can be realized and is adapted to actual use requirements.

When a wind load acts on the second main shaft 220, the second main shaft 220 will undergo torsional deformation, and drive the output member 130 to generate a certain rotation, until the output toggle portion 131 compresses the elastic member 142 and abuts against the pushing member 141. Since the pushing member 141 in the locking device 100 is in the locked position, and a first gap is provided between the pushing member 141 and the input toggle portion 121, the pushing member 141 cannot move along a direction approaching the input toggle portion 121 to abut against the input toggle portion 121. That is, the pushing member 141 cannot drive the input toggle portion 121 to rotate, such that the output member 130 is unable to drive the input member 120 to rotate. As such, the torque of the second main shaft 220 connected to the output member 130 cannot be transmitted to the first main shaft 210 connected to the input member 120. The torque is blocked at the locking device 100, thereby reducing the risk of the torque being transmitted to the driving unit 300 through the first main shaft 210 and affecting its use reliability. This improves the anti-torsion performance of the photovoltaic bracket 10, and thereby ensures the photovoltaic power generation rate. In a case of not being driven by an external force, the pushing member 141 may already be in the locked position. That is, when the wind load acts on the output member 130, the output toggle portion 131 cannot drive the pushing member 141 to continue moving. Certainly, in the case of not being driven by an external force, the pushing member 141 can also be between the locked position and an unlocked position, in which a position where the pushing member 141 moves to abut against the output toggle portion 131 is defined as the unlocked position. In this way, when the wind load acts on the output member 130, the output toggle portion 131 will drive the pushing member 141 to generate a slight movement, causing the pushing member 141 to move from a current position to the locked position, thereby realizing the blocking of torque.

As shown in FIG. 2, in an embodiment, the input member 120 and the output member 130 can be an input shaft and an output shaft, respectively. Both the input toggle portion 121 and the output toggle portion 131 can be pawls. The pushing member 141 can be a roller, and the elastic member 142 can be a spring.

Referring to FIG. 1 to FIG. 3, in an embodiment, the at least one input toggle portion 121 includes a plurality of input toggle portions 121. The plurality of input toggle portions 121 and a plurality of output toggle portions 131 are alternately arranged along the circumferential direction. By providing the plurality of input toggle portions 121 and the plurality of output toggle portions 131, the rigid contact area between the input member 120 and the output member 130 is increased, thereby making the torque transmission between the input member 120 and the output member 130 more stable and reliable. For example, in the embodiment shown in FIG. 3, the number of the input toggle portions 121 and the number of the output toggle portions 131 are both four. Between two adjacent input toggle portions 121, two elastic members 142 are provided. The two elastic members 142 are spaced apart at both ends of the output toggle portion 131 along the circumferential direction. Compared with providing one elastic member 142 between two input toggle portions 121, by providing two elastic members 142, each elastic member 142 individually controls one pushing member 141. This prevents the position of the pushing member 141 from being affected when transmitting torque in a forward direction or transmitting torque in a reverse direction, in which the affection on the position of the pushing member 141 would lead to a decrease in locking accuracy, thereby ensuring the use reliability of the locking device 100.

Referring to FIG. 2 to FIG. 4, in an embodiment, both ends of the output toggle portion 131 along the circumferential direction are each configured with a limiting groove 1311. When the pushing member 141 is in the locked position, the elastic member 142 is partially located in the limiting groove 1311. When the pushing member 141 abuts against the output toggle portion 131, the elastic member 142 is completely located in the limiting groove 1311. In other words, the limiting groove 1311 does not extend through the output toggle portion 131 along the circumferential direction thereof. Moreover, when the elastic member 142 is completely located in the limiting groove 1311, the elastic member 142 does not reach its maximum compression amount, so that it will not affect its use reliability. By providing the limiting groove 1311, on one hand, the elastic member 142 can be mounted and fixed. On the other hand, a compression path of the elastic member 142 can be restricted, which prevents the elastic member 142 from being shifted or bent during the process of the pushing member 141 moving to abut against the output toggle portion 131, thereby ensuring the subsequent locking precision.

Referring to FIG. 2 to FIG. 4, in an embodiment, when the pushing member 141 is in the locked position, the first gap is provided between the pushing member 141 and the input toggle portion 121 adjacent thereto. Through such a configuration, the pushing member 141 in the locked position is unable to transmit power to the input toggle portion 121, such that the output member 130 is unable to drive the input member 120 to rotate. The torque is blocked at the locking device 100, thereby reducing the risk of the torque being transmitted to the driving unit 300 through the first main shaft 210 and affecting its use reliability, improving the anti-torsion performance of the photovoltaic bracket 10, and thereby ensuring the photovoltaic power generation rate.

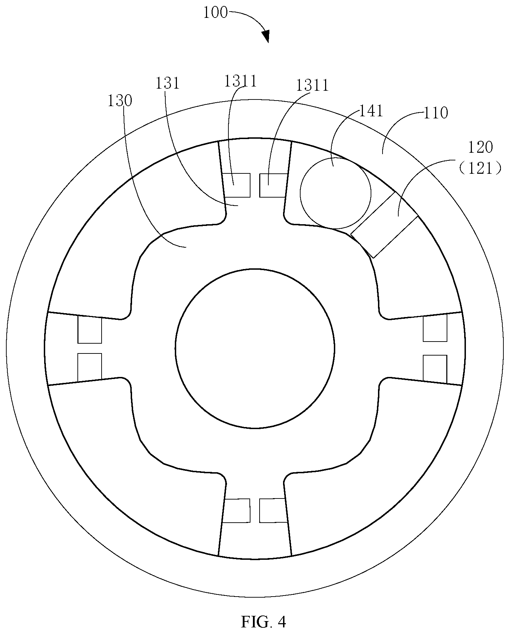

Referring to FIG. 3 and FIG. 4, in an embodiment, between the input toggle portion 121 and the output toggle portion 131 adjacent thereto, along the circumferential direction, and along a direction from the input toggle portion 121 to the output toggle portion 131, a radial distance between the output member 130 and the housing 110 gradually increases. When the pushing member 141 is in the locked position, a radial distance between a main body portion of the output member 130 and the housing 110 is equal to a diameter of the pushing member 141. In other words, an outer surface of the output member 130 is an irregular-shaped transition arc surface. Through such a variable-diameter configuration, the pushing member 141 can move along a direction approaching the output toggle portion 131. That is, the power can be transmitted from the input member 120 to the output member 130. Meanwhile, the housing 110 and the output member 130 cooperate to restrict the pushing member 141 in the locked position from moving towards a place with a smaller gap. That is, the pushing member 141 cannot move along the direction approaching the input toggle portion 121. Thus, the power of the output member 130 cannot be transmitted to the input member 120, realizing the blocking of torque.

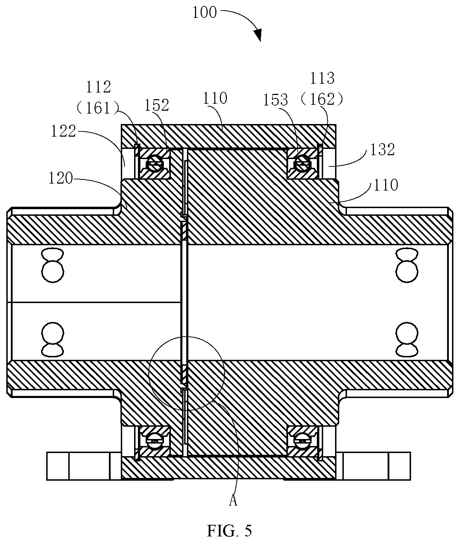

As shown in FIG. 2 and FIG. 5, in an embodiment, the locking device 100 further includes a first bearing 151. Along an axial direction of the first bearing 151, the input member 120 and the output member 130 are respectively connected to both sides of the first bearing 151. By providing the first bearing 151 between the input member 120 and the output member 130, a direct contact between the input member 120 and the output member 130 during the torque transmission process, which leads to excessive wear, is prevented, thereby extending the service life of the locking device 100. In some embodiments, as shown in FIG. 5 and FIG. 7, the first bearing 151 can be a thrust roller bearing 1511. A plurality of cylindrical rollers of the thrust roller bearing are configured to abut against the input member 120 and the input member 120.

As shown in FIG. 2 and FIG. 5, in an embodiment, a second bearing 152 is connected between an inner wall of the housing 110 and the input member 120. When the photovoltaic bracket 10 operates normally, the input member 120 generates rotational movement relative to the housing 110, and by providing the second bearing 152 between the input member 120 and the inner wall of the housing 110, a direct contact between the input member 120 and the housing 110, which leads to wear, can be prevented, thereby extending the service life of the locking device 100. Furthermore, a third bearing 153 is connected between the inner wall of the housing 110 and the output member 130. By providing the second bearing 152 and the third bearing 153, on one hand, the anti-torsion capability of the main shaft can be improved, which ensures that the input member 120 and the output member 130 rotate coaxially, ensuring their coaxiality, such that the locking device 100 can withstand a larger bending moment. At the same time, frictional wear between the input member 120 as well as the output member 130 and the housing 110 can be reduced, extending the service life of the locking device 100. Both the second bearing 152 and the third bearing 153 can be deep groove ball bearings.

As shown in FIG. 2 and FIG. 5, in an embodiment, the input member 120 is configured with a first stepped groove 122, and the second bearing 152 is located in the first stepped groove 122. The output member 130 is configured with a second stepped groove 132, and the third bearing 153 is located in the second stepped groove 132. By respectively providing stepped grooves on the input member 120 and the output member 130, it not only facilitates the assembly of the bearings, but also can reduce an occupied space of the input member 120 and the second bearing 152 along the radial direction, making the structure of the locking device 100 more compact.

As shown in FIG. 2 and FIG. 5, in an embodiment, the locking device 100 further includes a first limiting member 161 connected to the housing 110. The first limiting member 161 abuts against one side of the input member 120 along an axial direction of the input member 120, thereby restricting the input member 120 from moving along the axial direction of the input member 120. By restricting the axial movement of the input member 120, the possibility that the input toggle portion 121 can not abut against the pushing member 141 due to deviation of the input member 120 is reduced, thereby ensuring the reliability of torque transmission.

As shown in FIG. 2 and FIG. 5, in some embodiments, the first limiting member 161 includes a first retaining ring 1611 connected to the inner wall of the housing 110. The first retaining ring 1611 abuts against one side of the input member 120 along the axial direction of the input member 120, and abuts against one side of the second bearing 152. Furthermore, the inner wall of the housing 110 is further provided with a first engaging groove 112 configured to allow the first retaining ring 1611 to be engaged therein, so as to limit the first retaining ring 1611. In other embodiments, the first limiting member includes a first baffle connected to one side of the housing along an axial direction of the housing. The first baffle abuts against one side of the input member along the axial direction of the input member. The first baffle and the housing can be connected by fasteners such as screws.

As shown in FIG. 2 and FIG. 5, in some embodiments, the locking device 100 further includes a second limiting member 162 connected to the housing 110. The second limiting member 162 abuts against the output member 130, so as to restrict the output member 130 from moving along an axial direction of the output member 130. By restricting the axial movement of the output member 130, the possibility that the pushing member 141 can not abut against the output toggle portion 131 due to deviation of the output member 130 is reduced, ensuring the reliability of transmitting the input torque to the output member 130.

In some embodiments, as shown in FIG. 2 and FIG. 5, the second limiting member 162 includes a second retaining ring 1621 connected to the inner wall of the housing 110. The second retaining ring 1621 abuts against one side of the output member 130 along the axial direction of the output member 130, and abuts against one side of the third bearing 153. Further, the inner wall of the housing 110 is provided with a second engaging groove 113 configured to allow the second limiting member 162 to be engaged therein, so as to limit the second retaining ring 1621. In other embodiments, the second limiting member includes a second baffle connected to one side of the housing along an axial direction of the housing. The second baffle abuts against one side of the output member along the axial direction of the output member. The second baffle and the housing can be connected by fasteners such as screws.

Further, as shown in FIG. 8, an embodiment of the present application further provides a photovoltaic bracket 10. The photovoltaic bracket 10 includes a first main shaft 210, a second main shaft 220, and the aforementioned locking device 100 connected between the first main shaft 210 and the second main shaft 220. The first main shaft 210 and the second main shaft 220 are configured to be connected to a photovoltaic module. It can be understood that the photovoltaic bracket 10 further includes a driving unit 300. The first main shaft 210 is connected to an output end of the driving unit 300.

When the photovoltaic bracket 10 operates normally, the rotational power of the driving unit 300 is transmitted to the second main shaft 220 through the first main shaft 210 and the locking device 100, which realizes the synchronous co-rotation of the first main shaft 210 and the second main shaft 220, thereby ensuring the orientation consistency of the plurality of photovoltaic modules mounted on the first main shaft 210 and the second main shaft 220, and ensuring the photovoltaic power generation efficiency. When the wind load acts on the second main shaft 220, the torque is blocked by the locking device 100, which reduces the risk of the torque being transmitted to the driving unit 300 through the first main shaft 210 and affecting its use reliability, improving the anti-torsion performance of the photovoltaic bracket 10, and thereby ensuring the photovoltaic power generation rate. Through the cooperation of the locking device 100 and the driving unit 300, the torque maintaining points of the photovoltaic bracket are increased from one to multiple. As such, the wind resistance capability of the entire photovoltaic bracket is significantly improved.

Further, the present application also provides a photovoltaic system (not shown in the figures). The photovoltaic system includes the aforementioned photovoltaic bracket 10 and a photovoltaic module connected to the photovoltaic bracket 10. The photovoltaic system includes the aforementioned photovoltaic bracket, and thus it not only can realize the transmission of power, but also can improve the anti-torsion performance of the photovoltaic bracket, thereby improving the use reliability of the photovoltaic system.

It should be noted that similar reference numerals and letters indicate similar items in the following drawings. Therefore, once an item is defined in one drawing, it does not need to be further defined and explained in subsequent drawings.

In addition, if the terms "first" and "second" appear, these terms are only used for purpose of description, and cannot be understood as indicating or implying relative importance or implicitly indicating the number of the indicated technical features. Therefore, a feature defined by "first" or "second" may explicitly or implicitly include at least one such feature. In the description of the present application, if the term "a plurality of" appears, "a plurality of" means at least two, such as two, three, etc., unless otherwise defined explicitly and specifically.

In addition, in the description of the embodiments of the present application, unless otherwise clearly specified and defined, the terms "mounted", "connected", "coupled", "fixed" and the like should be understood broadly. For example, an element, when being referred to as being "mounted", "connected", "coupled", or "fixed" to another element, unless otherwise specifically defined, may be fixedly connected, detachably connected, or integrated to the other element, may be mechanical connected or electrically connected to the other element, and may be directly connected to the other element or connected to the other element via an intermediate medium, or may be internal communication between two elements. For those skilled in the art, the specific meanings of the above terms in the present application can be understood according to specific circumstances.

In the description of the present application, it should be understood that the terms "center", "up", "down", "left", "right", "vertical", "horizontal", "inner", "outer", etc. indicate the orientations or positional relationships on the basis of the drawings. These terms are only for the convenience of describing the present application and simplifying the description, rather than indicating or implying that the related devices or element must have the specific orientations, or be constructed or operated in the specific orientations, and therefore cannot be understood as limitations of the present application. In addition, the terms "first", "second", and "third" are only used for descriptive purposes, and cannot be understood as indicating or implying relative importance.

Finally, it should be noted that the above embodiments are only used to illustrate the technical solutions of the present application, rather than limiting them. Although the present application has been described in detail with reference to the foregoing embodiments, those of ordinary skill in the art should understand that they can still modify the technical solutions described in the foregoing embodiments, or make equivalent substitutions for some or all of the technical features therein. These modifications or substitutions do not make the essence of the corresponding technical solutions depart from the scope of the technical solutions of the embodiments of the present application.

## Claims

1. A locking device, applied to a main shaft of a photovoltaic bracket, and comprising:
a housing (110);
an input member (120), at least partially located in the housing (110) and configured with at least one input toggle portion (121); and
an output member (130) at least partially located in the housing (110) and configured with at least two output toggle portions (131), the output toggle portions (131) and the input toggle portion (121) are alternately arranged along a circumferential direction;
wherein a pushing member (141) and an elastic member (142) are provided between each of the output toggle portions (131) and the input toggle portion (121); and the elastic member (142) is connected between the pushing member (141) and the output toggle portion (131) and is configured to drive the pushing member (141) to be in a locked position;
when the pushing member (141) is in the locked position, the housing (110) and the output member (130) cooperate to restrict the pushing member (141) from abutting against the input toggle portion (121) along the circumferential direction, and the input member (120) is configured to be operably rotated, so as to drive the pushing member (141) to deviate from the locked position through the input toggle portion (121) until the pushing member (141) abuts against the output toggle portion (131) to drive the output member (130) to rotate.

2. The locking device according to claim 1, wherein the at least one input toggle portion (121) comprises a plurality of input toggle portions (121); between adjacent input toggle portions (121), two elastic members (142) are provided; the two elastic members (142) are spaced apart at both ends of the output toggle portion (131) along the circumferential direction.

3. The locking device according to claim 2, wherein both ends of the output toggle portion (131) along the circumferential direction are each configured with a limiting groove (1311); when the pushing member (141) is in the locked position, the elastic member (142) is partially located in the limiting groove (1311); when the pushing member (141) abuts against the output toggle portion (131), the elastic member (142) is completely located in the limiting groove (1311).

4. The locking device according to claim 1, wherein when the pushing member (141) is in the locked position, a first gap is provided between the pushing member (141) and the input toggle portion (121).

5. The locking device according to claim 4, wherein between the input toggle portion (121) and the output toggle portion (131) adjacent thereto, along the circumferential direction, and along a direction from the input toggle portion (121) to the output toggle portion (131), a radial distance between the output member (130) and the housing (110) gradually increases; when the pushing member (141) is in the locked position, a radial distance between the output member (130) and the housing (110) is equal to a diameter of the pushing member (141).

6. The locking device according to claim 1, wherein the locking device further comprises a first bearing (151), and along an axial direction of the first bearing (151), the input member (120) and the output member (130) are respectively connected to both sides of the first bearing (151).

7. The locking device according to claim 6, wherein the first bearing (151) is a thrust roller bearing (1511).

8. The locking device according to claim 1, wherein a second bearing (152) is connected between an inner wall of the housing (110) and the input member (120); and a third bearing (153) is connected between the inner wall of the housing (110) and the output member (130).

9. The locking device according to claim 8, wherein the input member (120) is configured with a first stepped groove (122), and the second bearing (152) is located in the first stepped groove (122); the output member (130) is configured with a second stepped groove (132), and the third bearing (153) is located in the second stepped groove (132).

10. The locking device according to claim 1, wherein the locking device further comprises a first limiting member (161) connected to the housing (110); and the first limiting member (161) abuts against one side of the input member (120) along an axial direction of the input member (120) to restrict the input member (120) from moving along the axial direction of the input member (120); the locking device further comprises a second limiting member (162) connected to the housing (110); and the second limiting member (162) abuts against the output member (130) to restrict the output member (130) from moving along an axial direction of the output member (130).

11. The locking device according to claim 10, wherein the first limiting member (161) comprises a first retaining ring (1611) connected to an inner wall of the housing (110), and the first retaining ring (1611) abuts against one side of the input member (120) along the axial direction of the input member (120); or the first limiting member comprises a first baffle connected to one side of the housing along an axial direction of the housing, and the first baffle abuts against one side of the input member along the axial direction of the input member.

12. The locking device according to claim 10, wherein the second limiting member (162) comprises a second retaining ring (1621) connected to an inner wall of the housing (110), and the second retaining ring (1621) abuts against one side of the output member (130) along the axial direction of the output member (130); or the second limiting member comprises a second baffle connected to one side of the housing along an axial direction of the housing, and the second baffle abuts against one side of the output member along the axial direction of the output member.

13. The locking device according to claim 10, wherein an inner wall of the housing (110) is provided with a first engaging groove (112) configured to allow the first limiting member (161) to be engaged therein; and the inner wall of the housing (110) is provided with a second engaging groove (113) configured to allow the second limiting member (162) to be engaged therein.

14. A photovoltaic bracket, comprising a first main shaft (210), a second main shaft (220), and the locking device (100) according to any one of claims 1 to 13 connected between the first main shaft (210) and the second main shaft (220); and the first main shaft (210) and the second main shaft (220) being configured to mount a photovoltaic module.

15. A photovoltaic system, comprising the photovoltaic bracket according to claim 14 and a photovoltaic module mounted on the photovoltaic bracket.
